# FASCICULE DE BREVET EUROPEEN

(11) **EP 2 172 639 B1**
(45) Date de publication et mention de la délivrance du brevet: **25.05.2011**
(21) Numéro de dépôt: 09305894.9
(22) Date de dépôt: 24.09.2009
(51) Int. Cl.: F02M 35/024, F02M 35/10, F02M 35/16, B01D 46/00

(54) **Dispositif d'admission d'air, apte à former au moins une portion de ligne d'admission d'air pour moteur à combustion interne de véhicule automobile**
Luftzufuhrvorrichtung, die zumindest einen Teil der Luftzufuhrleitung für einen Kraftfahrzeug-Verbrennungsmotor darstellen kann
Air intake device capable of forming at least one portion of the air intake line for the internal combustion engine of an automobile

(30) Priorité: 01.10.2008 FR 0805425
(43) Date de publication de la demande: 07.04.2010
(73) Titulaire: Tristone Flowtech Solutions (TFS), 44470 Carquefou (FR)
(72) Inventeur: Le Mouellic, Bruno, 44470 Carquefou (FR)
(74) Mandataire: Laget, Jean-Loup

(56) Documents cités:
- EP-A- 0 824 949
- EP-A- 0 965 378
- DE-A1- 10 200 673
- DE-A1-102004 036 083
- DE-A1-102005 013 473

## Description

La présente invention concerne un dispositif d'admission d'air, apte à former au moins une portion de ligne d'admission d'air pour moteur à combustion interne de véhicule automobile.

Elle concerne plus particulièrement un dispositif d'admission d'air comportant au moins :
- une bouche d'entrée d'air,
- un boîtier de filtration d'air présentant au moins une entrée et une sortie d'air disposées de part et d'autre d'une zone de filtration apte à recevoir un élément filtrant compartimentant ledit boîtier, et une chambre, dite de décantation, vidangeable, située sous la zone de filtration pour récupérer les condensats de l'élément filtrant, et,
- disposée entre ladite bouche d'entrée d'air et ledit boîtier de filtration, une chambre supplémentaire vidangeable de collecte de liquide, ladite chambre supplémentaire communiquant avec ladite bouche d'entrée d'air et l'entrée du boîtier de filtration pour permettre la circulation d'air depuis la bouche d'entrée d'air vers l'entrée du boîtier de filtration.

De tels dispositifs d'admission d'air sont notamment décrits dans les brevets EP-0.965.378 et DE-10 2004 036083.

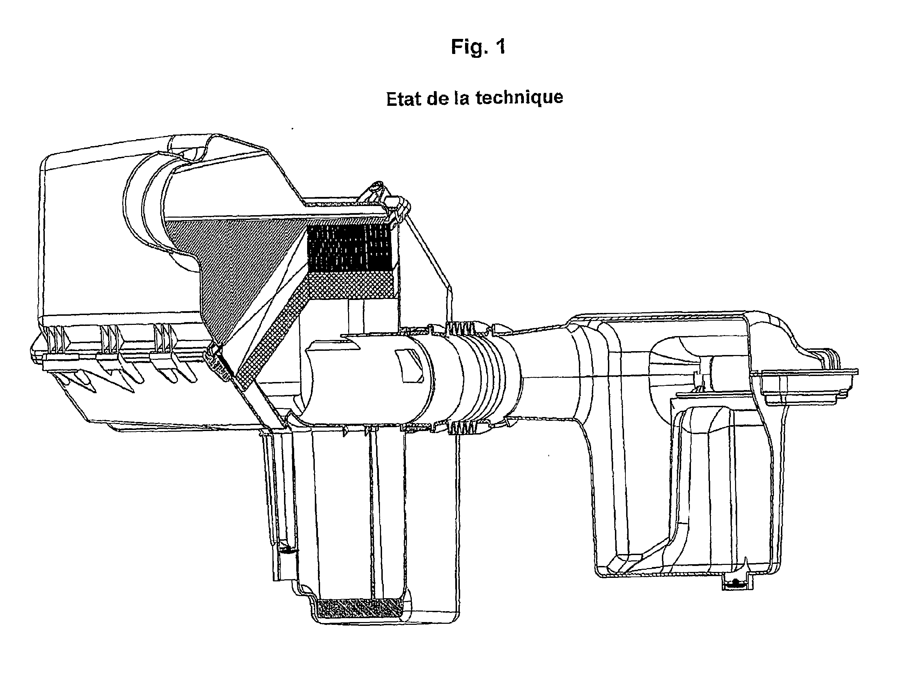

Jusqu'à présent et comme l'illustre la figure 1 représentant l'état de la technique, la chambre de collecte de liquides d'origines diverses, tels que condensats, eaux de ruissellement et/ou de pluie et/ou de flaque d'eau, susceptibles d'être présents dans le dispositif, est entièrement indépendante de la chambre de decantation disposée dans le boîtier de filtration et chargée de récupérer par gravité les condensats résultat de la filtration. Chaque chambre est pourvue de son propre orifice de vidange obturable débouchant dans l'atmosphère, en l'occurrence sous le capot du véhicule. L'inconvénient d'une telle solution résulte du fait que la colonne d'eau doit, dans la chambre de décantation, être de hauteur importante pour permettre l'ouverture de l'organe d'obturation, tel qu'une membrane, apte à passer de la position fermée à la position ouverte sous l'effet de la pression appliquée par ladite colonne d'eau sur la membrane. Comme la hauteur de la colonne d'eau est limitée par construction, les condensats tendent à stagner dans ladite colonne et l'efficacité de la décantation est réduite.

Un but de la présente invention est de proposer un dispositif d'admission d'air du type précité dont la conception permet de réduire la hauteur de la colonne d'eau nécessaire à l'ouverture de l'organe d'obturation de la chambre de décantation et d'augmenter l'efficacité de la décantation.

Un autre but de la présente invention est de proposer un dispositif d'admission d'air du type précité dont la conception permet d'utiliser la dépression régnant dans une chambre vidangeable disposée en amont du boîtier de filtration comme aide à l'ouverture de l'organe d'obturation de la chambre de décantation en vue d'une vidange plus aisée de ladite chambre de décantation.

Un autre but de la présente invention est de proposer un dispositif d'admission d'air dont la conception permet d'utiliser la dépression régnant dans une chambre vidangeable disposée en amont du boîtier de filtration comme aide à la décantation par création d'un flux d'aspiration au niveau de ladite chambre de décantation.

A cet effet, l'invention a pour objet un dispositif d'admission d'air, apte à former au moins une portion de ligne d'admission d'air pour moteur à combustion interne de véhicule automobile, ledit dispositif comportant au moins :
- une bouche d'entrée d'air,
- un boîtier de filtration d'air présentant au moins une entrée et une sortie d'air disposées de part et d'autre d'une zone de filtration apte à recevoir un élément filtrant compartimentant ledit boîtier, et une chambre, dite de décantation, vidangeable, située sous la zone de filtration pour récupérer les condensats de l'élément filtrant, et,
- disposée entre ladite bouche d'entrée d'air et ledit boîtier de filtration, une chambre supplémentaire vidangeable de collecte de liquide, ladite chambre supplémentaire communiquant avec ladite bouche d'entrée d'air et l'entrée du boîtier de filtration pour permettre la circulation d'air depuis la bouche d'entrée d'air vers l'entrée du boîtier de filtration,
   caractérisé en ce que le dispositif d'admission d'air comprend, entre la chambre de décantation et la chambre supplémentaire de collecte, au moins un passage de communication permettant la vidange de la chambre de décantation dans la chambre supplémentaire, ledit passage de communication étant équipé d'au moins un organe d'obturation sensible à la pression, apte à passer d'une position fermée à une position ouverte de vidange de la chambre de décantation et inversement, en fonction du différentiel de pression appliqué audit organe d'obturation.

Grâce au fait que les chambres de décantation et de collecte communiquent entre elles par une liaison apte à être soumise à la dépression régnant dans la chambre supplémentaire de collecte, la chambre de décantation peut bénéficier des effets de la dépression régnant dans ladite chambre supplémentaire de collecte. Cette dépression facilite le passage de la position fermée à la position ouverte de l'organe d'obturation du passage de communication entre lesdites chambres de sorte que la chambre de décantation, même faiblement remplie, peut être vidangée. Le flux d'aspiration au niveau de la chambre de décantation résultant de la dépression dans la chambre supplémentaire de collecte accroît également l'efficacité de la décantation.

Il doit être noté que l'organe d'obturation présenté deux surfaces opposées tournées l'une vers la chambre de décantation, l'autre vers la chambre supplémentaire. On entend par différentiel de pression, la différence ou l'écart de pression entre la pression appliquée sur la surface de l'organe d'obturation tournée vers la chambre de décantation et la pression exercée sur la surface de l'organe d'obturation opposée, tournée vers la chambre supplémentaire de collecte.

Dans un mode de réalisation particulier de l'invention, dans lequel le différentiel de pression appliqué audit organe d'obturation correspond à la différence entre la pression s'exerçant sur la surface de l'organe d'obturation tournée vers la chambre de décantation et la pression s'appliquant sur la surface opposée de l'organe d'obturation tournée vers la chambre supplémentaire, l'organe d'obturation est apte à passer de la position fermée à la position ouverte lorsque le différentiel est positif et supérieur à une valeur seuil prédéterminée.

Ainsi, lorsque la chambre supplémentaire fait par exemple office de chambre anti-vague, elle est apte à recevoir un flux important de liquide résultant du passage du véhicule dans une flaque d'eau et de l'entrée accidentelle d'une grande quantité d'eau dans le dispositif d'admission d'air. L'eau contenue dans la chambre supplémentaire empêche, en raison de la pression qu'elle exerce sur l'organe d'obturation, toute ouverture dudit organe et donc toute communication entre la chambre de décantation et la chambre supplémentaire de collecte. A l'inverse, dès que cette chambre supplémentaire de collecte est vidangée, la dépression régnant dans ladite chambre et résultant de la circulation d'air entre bouche d'air et entrée du boîtier de filtration au niveau de ladite chambre facilite l'ouverture de l'organe d'obturation du passage de communication entre chambre de décantation et chambre supplémentaire de collecte. Cette ouverture s'effectue dans des conditions prédéterminées par construction en fonction du différentiel de pression choisi.

De préférence, l'organe d'obturation du passage de communication affecte la forme d'une membrane déformable ou mobile.

La réalisation de l'organe d'obturation sous la forme d'une membrane mince rend l'organe d'obturation particulièrement sensible à la pression et en particulier aux pressions s'appliquant sur chacune des faces opposées de ladite membrane.

L'invention sera bien comprise à la lecture de la description suivante d'exemples de réalisation, en référence aux dessins annexés dans lesquels :
la figure 1 représente un dispositif d'admission d'air conforme à l'état de la technique ;
la figure 2 représente une vue partiellement en coupe d'un premier mode de réalisation d'un dispositif d'admission d'air conforme à l'invention dans lequel la chambre supplémentaire de collecte de liquide est formée par une chambre anti-vague ;
la figure 3 représente une vue partiellement en coupe d'un deuxième mode de réalisation de l'invention dans lequel la chambre supplémentaire de collecte de liquide est formée par une colonne de décantation et dans lequel le passage de communication affecte la forme d'un conduit ;
la figure 4 représente une vue partiellement en coupe d'un troisième mode de réalisation de l'invention dans lequel la chambre supplémentaire de collecte de liquide forme également un résonateur.

Comme mentionné ci-dessus, le dispositif d'admission d'air, objet de l'invention, est apte à former au moins une portion de ligne d'admission d'air pour moteur à combustion interne de véhicule automobile. Ce dispositif comporte au moins une bouche 1 d'entrée d'air servant à l'alimentation en air du dispositif et un boîtier 2 de filtration d'air présentant au moins une entrée 3 et une sortie 4 d'air. Ce boîtier 2 de filtration délimite une enceinte à l'intérieur de laquelle est apte à être logé un élément 7 filtrant de type cartouche à filtre plissé. Cet élément 7 filtrant compartimente l'enceinte dudit boîtier 2 en deux chambres : l'une dite amont, dans laquelle l'entrée 3 d'air du boîtier 2 de filtration débouche, l'autre, dite aval, munie de la au moins une sortie 4 d'air. La zone de l'enceinte du boîtier 2 de filtration dans laquelle l'élément 7 filtrant est logé est appelée zone 5 de filtration du boîtier 2 de filtration. Cette zone 5 forme le siège dudit élément 7 filtrant.

Ce boîtier 2 de filtration comporte encore une chambre 6, dite de décantation, vidangeable, située sous la zone 5 de filtration. Cette chambre 6 de décantation est chargée de récupérer les condensats de l'élément 7 filtrant. Cette récupération s'opère par gravité, les condensats étant guidés par les plis du filtre de l'élément 7 filtrant en direction de l'entrée de la chambre 6 de décantation.

Le dispositif comporte encore, disposée entre la bouche 1 d'entrée d'air et le boîtier 2 de filtration, une chambre 8 supplémentaire vidangeable de collecte de liquide. Les liquides collectés à l'intérieur de cette chambre 8 supplémentaire peuvent être d'origines diverses. Ils peuvent être formés par des condensats résultant d'un suivi de file. En effet, lorsque le véhicule suit de manière très proche un autre véhicule, une condensation se forme à l'intérieur du dispositif d'admission d'air. Ces liquides peuvent encore résulter de ruissellement à l'intérieur du dispositif d'admission d'air ou de l'entrée intempestive d'eau de pluie à l'intérieur du dispositif ou bien encore du passage dans une flaque d'eau du véhicule automobile, au moins une partie de ladite flaque d'eau entrant de manière accidentelle à l'intérieur du dispositif d'admission d'air.

Cette chambre 8 supplémentaire communique avec la bouche 1 d'entrée d'air et l'entrée 3 du boîtier 2 de filtration pour permettre la circulation d'air depuis la bouche 1 d'entrée d'air vers l'entrée 3 du boîtier 2 de filtration. Généralement, la bouche d'entrée d'air et l'entrée 3 du boîtier 2 de filtration sont disposées par rapport à ladite chambre 8 supplémentaire de manière à permettre une circulation d'air en partie haute de ladite chambre, la partie basse de ladite chambre formant la zone de collecte de liquide. Il en résulte la formation dans cette zone de collecte de ladite chambre une dépression du fait que l'air est aspiré depuis la bouche 1 d'entrée d'air vers l'entrée 3 du boîtier 2 de filtration à l'état raccordé du dispositif d'admission d'air au moteur à combustion interne. Cette dépression est utilisée comme moyen d'optimisation du fonctionnement de la chambre de décantation comme cela sera décrit ci-après.

En effet, de manière caractéristique à l'invention, le dispositif d'admission d'air comprend, entre la chambre 6 de décantation et la chambre 8 supplémentaire de collecte, au moins un passage 9 de communication permettant la vidange de la chambre 6 de décantation dans la chambre 8 supplémentaire. Ce passage 9 de communication est équipé d'au moins un organe 10 d'obturation sensible à la pression. Cet organe 10 d'obturation est apte à passer d'une position fermée à une position ouverte de vidange de la chambre 6 de décantation et inversement, en fonction de la différence ou écart de pression s'appliquant sur chacune des surfaces 11, 12 opposées dudit organe 10 d'obturation tournées l'une, représentée en 11 aux figures, vers la chambre 6 supplémentaire, l'autre, représentée en 12 aux figures, vers la chambre 8 supplémentaire. Ainsi, lorsque le différentiel de pression appliqué audit organe 10 d'obturation et correspondant à la différence entre la pression P1 s'exerçant sur la surface 11 de l'organe 10 d'obturation tournée vers la chambre 6 de décantation et la pression P2 s'appliquant sur la surface 12 opposée dudit organe, est positif et supérieur à une valeur seuil prédéterminée, l'organe 10 d'obturation passe de la position fermée à la position ouverte. Dans ces conditions, la dépression qui règne à l'intérieur de la chambre 8 supplémentaire tend à aider à l'ouverture de l'organe 10 d'obturation et à faciliter la vidange de la chambre 6 de décantation. A l'inverse, lorsque la chambre 8 supplémentaire accueille une quantité importante de liquide résultant d'une entrée accidentelle de liquide dans ledit dispositif d'admission, l'organe 10 d'obturation est maintenu fermé.

Dans les exemples représentés, l'organe 10 d'obturation du passage 9 de communication affecte la forme d'une membrane. Cette membrane peut être réalisée simplement déformable sous l'effet de la pression appliquée sur chacune de ses faces, ou réalisée sous forme d'une membrane mobile, la pression appliquée sur chacune des faces de ladite membrane entraînant un déplacement à coulissement de ladite membrane par rapport à son siège dans le dispositif.

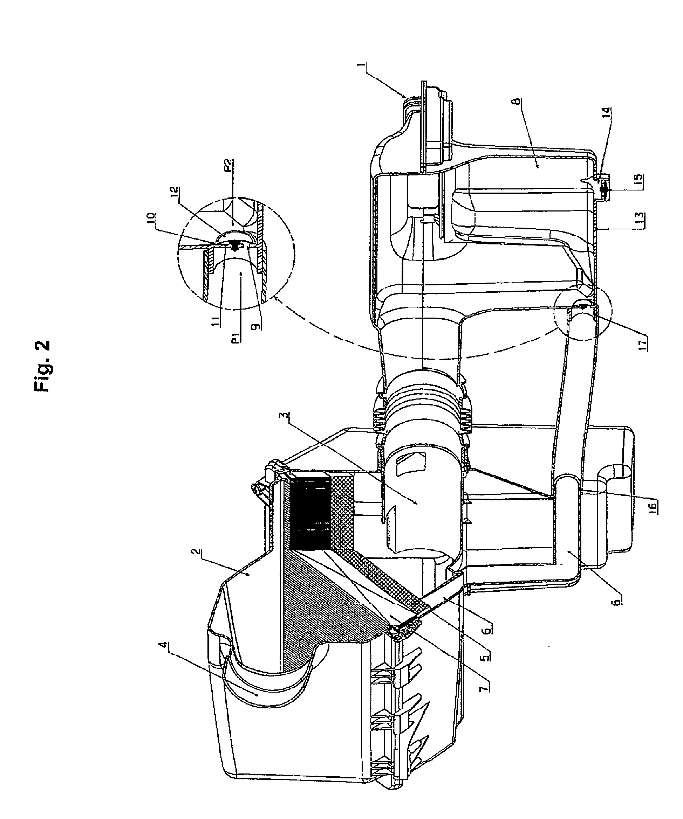

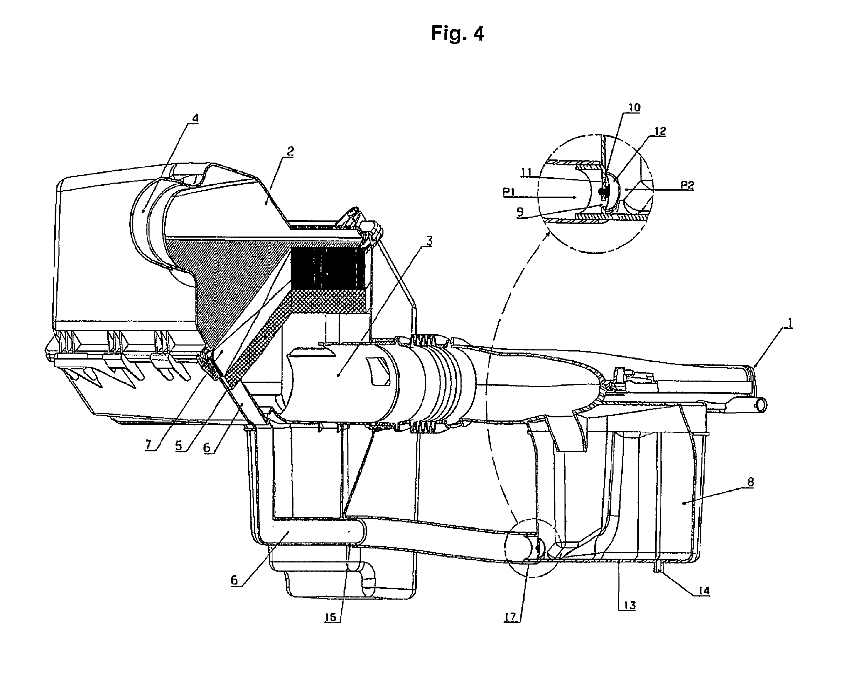

Divers modes de réalisation du passage 9 de communication entre chambre 6 de décantation et chambre 8 supplémentaire de collecte peuvent être envisagés. Ainsi, comme l'illustrent les figures 2 et 4, le passage 9 de communication peut être formé d'un orifice de communication entre chambre 6 de décantation et chambre 8 supplémentaire, ledit orifice de communication étant ménagé dans une paroi de la chambre 8 supplémentaire. Dans ce cas, ledit orifice de communication est obturé par un organe 10 d'obturation, de préférence de type membrane, disposé essentiellement à l'intérieur de la chambre 8 supplémentaire, l'une des faces de ladite membrane venant s'appliquer sur la paroi de la chambre 8 supplémentaire dans laquelle est ménagé l'orifice de communication et étant soumise à une pression P1, l'autre face étant soumise à une pression P2 correspondant à la pression régnant à l'intérieur de la chambre 8 supplémentaire.

Dans ces exemples de réalisation, l'orifice de communication est disposé au voisinage de la face 13 formant fond de la chambre 8 supplémentaire et forme le point bas de la chambre de décantation afin que la chambre de décantation puisse être vidangée par simple écoulement gravitaire dans la chambre 8 supplémentaire.

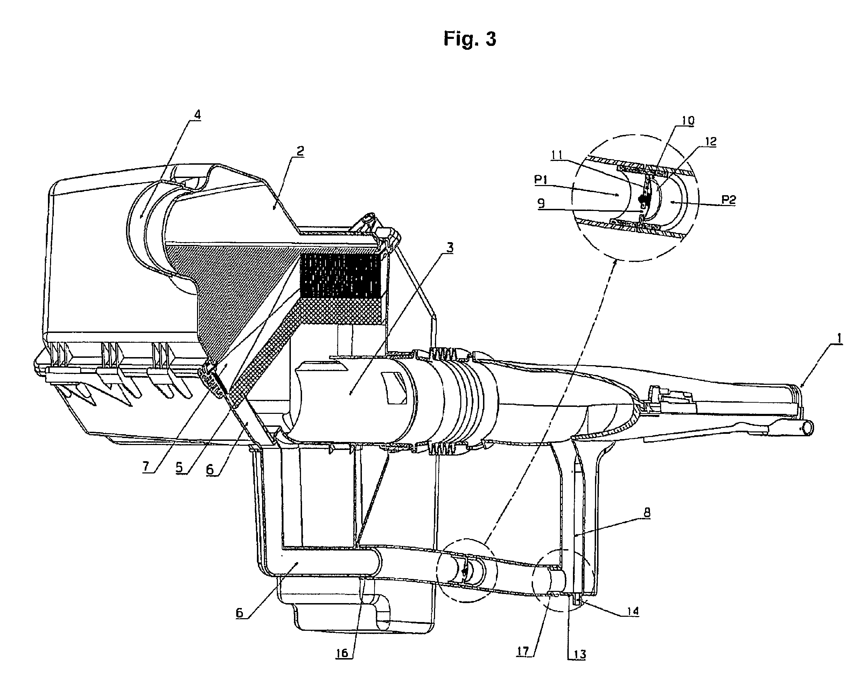

Dans un autre mode de réalisation conforme à celui représenté à la figure 3, le passage 9 de communication entre lesdites chambres 6, 8 affecte la forme d'un conduit raccordant la chambre 6 de décantation à la chambre 8 supplémentaire, la zone 16 de raccordement à la chambre 6 de décantation étant disposée à un niveau supérieur à la zone 17 de raccordement à la chambre 8 supplémentaire. Le fonctionnement de l'organe 10 d'obturation est, dans ce mode de réalisation, analogue à celui obtenu dans l'exemple des figures 2 et 4. A chaque fois, cet organe 10 d'obturation présente deux surfaces opposées tournées l'une vers la chambre 8 supplémentaire de collecte, l'autre vers la chambre 6 de décantation, chaque surface étant soumise à une pression représentée en P2 et P1 aux figures, l'écart entre lesdites pressions assurant l'ouverture ou la fermeture dudit organe 10 d'obturation.

Indépendamment du mode de réalisation retenu pour le passage 9 de communication, la chambre 8 supplémentaire vidangeable est équipée d'un orifice 14 de vidange ménagé dans la face 13 formant fond de ladite chambre 8. Cet orifice 14 de vidange est situé à un niveau inférieur au débouché du passage 9 de communication dans la chambre 8 supplémentaire pour permettre une vidange optimale de la chambre 8 supplémentaire en toute circonstance. Dans certains exemples de réalisation, l'orifice 14 de vidange de la face 13 formant fond de la chambre 8 supplémentaire est muni d'un organe 15 d'obturation sensible à la pression. La présence de cet organe 15 d'obturation n'est pas obligatoire.

Comme l'illustrent les exemples des figures 2 à 4, la fonction de la chambre 8 supplémentaire peut être diverse et variée en fonction de la configuration du dispositif d'admission d'air. Ainsi, dans l'exemple représenté à la figure 2, cette chambre 8 supplémentaire fait office de chambre anti-vague et est apte à recueillir au moins une partie du fluide admis de manière accidentelle dans le dispositif d'admission d'air par la bouche 1 d'entrée d'air lorsque le véhicule équipé d'un tel dispositif d'admission d'air roule dans une flaque d'eau.

Dans l'exemple représenté à la figure 3, la chambre 8 supplémentaire affecte la forme d'une colonne de décantation chargée de récupérer les condensats et les éventuels ruissellements pouvant se produire à l'intérieur du dispositif d'admission d'air.

Dans la figure 4, la chambre 8 supplémentaire fait également office de chambre de résonateur. Dans tous les cas, cette chambre 8 supplémentaire est disposée sur la ligne d'admission d'air en amont de la chambre de décantation du boîtier de filtration et est soumise à une circulation d'air amenant à la création d'une dépression dans la zone de ladite chambre chargée de collecter des liquides, zone dans laquelle débouche le passage de communication entre chambre 6 de décantation et chambre 8 supplémentaire.

Le fonctionnement d'un dispositif d'admission, tel que décrit ci-dessus, est analogue au dispositif d'admission d'air de l'état de la technique à l'exception du fonctionnement de l'organe 10 d'obturation qui est apte à passer de la position fermée à la position ouverte en fonction des pressions P1 et P2 auxquelles il est soumis. Ainsi, lorsque l'écart de pression entre la pression P1 appliquée sur la surface 11 de l'organe 10 d'obturation tournée vers la chambre 6 de décantation et la pression P2 appliquée sur la surface 12 de l'organe 10 d'obturation tournée vers la chambre 8 supplémentaire est positif et supérieur à une valeur seuil prédéterminée, l'organe 10 d'obturation s'ouvre. A l'inverse, lorsque la pression P2 est supérieure à la pression P1, l'organe 10 d'obturation reste en position fermée. De même, lorsque la pression P1 est sensiblement égale à la pression P2, l'organe d'obturation reste en position fermée afin d'éviter l'ouverture permanente dudit organe 10 d'obturation.

Grâce à la conception retenue, il est possible de réduire la hauteur de la colonne d'eau nécessaire à la vidange de la chambre de décantation du boîtier de filtration. Il en résulte une réduction de l'encombrement de l'ensemble, si cela est souhaité, et dans tous les cas, une augmentation de l'efficacité de la décantation associée à une meilleure vidange de la chambre de décantation.

## Revendications

1. Dispositif d'admission d'air, apte à former au moins une portion de ligne d'admission d'air pour moteur à combustion interne de véhicule automobile, ledit dispositif comportant au moins :
- une bouche (1) d'entrée d'air,
- un boîtier (2) de filtration d'air présentant au moins une entrée (3) et une sortie (4) d'air disposées de part et d'autre d'une zone (5) de filtration apte à recevoir un élément (7) filtrant compartimentant ledit boîtier (2), et une chambre (6), dite de décantation, vidangeable, située sous la zone (5) de filtration pour récupérer les condensats de l'élément (7) filtrant, et,
- disposée entre ladite bouche (1) d'entrée d'air et ledit boîtier (2) de filtration, une chambre (8) supplémentaire vidangeable de collecte de liquide, ladite chambre (8) supplémentaire communiquant avec ladite bouche (1) d'entrée d'air et l'entrée (3) du boîtier (2) de filtration pour permettre la circulation d'air depuis la bouche (1) d'entrée d'air vers l'entrée (3) du boîtier (2) de filtration, **caractérisé en ce que** le dispositif d'admission d'air comprend, entre la chambre (6) de décantation et la chambre (8) supplémentaire de collecte, au moins un passage (9) de communication permettant la vidange de la chambre (6) de décantation dans la chambre (8) supplémentaire, ledit passage (9) de communication étant équipé d'au moins un organe (10) d'obturation sensible à la pression, apte à passer d'une position fermée à une position ouverte de vidange de la chambre (6) de décantation et inversement, en fonction du différentiel de pression appliqué audit organe (10) d'obturation.

2. Dispositif d'admission d'air selon la revendication 1,
**caractérisé en ce que** le différentiel de pression appliqué audit organe (10) d'obturation correspondant à la différence entre la pression (P1) s'exerçant sur la surface (11) de l'organe (10) d'obturation tournée vers la chambre (6) de décantation et la pression (P2) s'appliquant sur la surface (12) opposée de l'organe (10) d'obturation tournée vers la chambre (8) supplémentaire, l'organe (10) d'obturation est apte à passer de la position fermée à la position ouverte lorsque le différentiel est positif et supérieur à une valeur seuil prédéterminée.

3. Dispositif d'admission d'air selon l'une des revendications 1 et 2,
**caractérisé en ce que** l'organe (10) d'obturation du passage (9) de communication affecte la forme d'une membrane déformable ou mobile.

4. Dispositif d'admission d'air selon l'une des revendications 1 à 3,
**caractérisé en ce que** le passage (9) de communication est formé d'un orifice de communication entre chambre (6) de décantation et chambre (8) supplémentaire, ledit orifice de communication étant ménagé dans une paroi de la chambre (8) supplémentaire.

5. Dispositif d'admission d'air selon la revendication 4,
**caractérisé en ce que** ledit orifice de communication est obturé par un organe (10) d'obturation, de préférence de type membrane, disposé essentiellement à l'intérieur de la chambre (8) supplémentaire.

6. Dispositif d'admission d'air selon l'une des revendications 4 et 5,
**caractérisé en ce que** l'orifice de communication est disposé au voisinage de la face (13) formant fond de la chambre (8) supplémentaire et forme le point bas de la chambre (6) de décantation.

7. Dispositif d'admission d'air selon l'une des revendications 1 à 3,
**caractérisé en ce que** le passage (9) de communication affecte la forme d'un conduit raccordant la chambre (6) de décantation à la chambre (8) supplémentaire, la zone (16) de raccordement à la chambre (6) de décantation étant disposée à un niveau supérieur à la zone (17) de raccordement à la chambre (8) supplémentaire.

8. Dispositif d'admission d'air selon l'une des revendications 1 à 7,
**caractérisé en ce que** la chambre (8) supplémentaire vidangeable est équipée d'un orifice (14) de vidange ménagé dans la face (13) formant fond de ladite chambre (8).

9. Dispositif d'admission d'air selon la revendication 8,
**caractérisé en ce que** l'orifice (14) de vidange est muni d'un organe (15) d'obturation sensible à la pression.

## Claims

1. An air admission device, capable of forming at least one portion of an air admission line for an internal combustion engine of a motor vehicle, said device including at least:
- an air intake mouth (1),
- an air filtration casing (2) having at least one air inlet (3) and outlet (4) positioned on either side of a filtration area (5) capable of receiving a filtering element (7) compartmenting said casing (2), and a so-called emptyable decantation chamber (6), located under the filtration area (5) for recovering the condensates of the filtering element (7), and,
- positioned between said air intake mouth (1) and said filtration casing, an emptyable additional chamber (8) for collecting liquid, said additional chamber (8) communicating with said air intake mouth (1) and the inlet (3) of the filtration casing (2) in order to allow air flow from the air intake mouth (1) to the inlet (3) of the filtration casing (2), **characterized in that** the air admission device comprises, between the decantation chamber (6) and the additional collection chamber (8), at least one communication passage (9) allowing the decantation chamber (6) to be emptied into the additional chamber (8), said communication passage (9) being equipped with at least one pressure-sensitive obturation member (10), capable of switching from a closed position to an open position for emptying the decantation chamber (6) and conversely depending on the pressure difference applied to said obturation member (10).

2. The air admission device according to claim 1, **characterized in that** the pressure difference applied to said obturation member (10) corresponding to the difference between the pressure (P1) exerted on the surface (11) of the obturation member (10) turned towards the decantation chamber (6) and the pressure (P2) applied on the opposite surface (12) of the obturation member (10) turned towards the additional chamber (8), the obturation member (10) is able to switch from the closed position to the open position when the differential is positive and greater than a predetermined threshold value.

3. The air admission device according to one of claims 1 and 2, **characterized in that** the member (10) for obturating the communication passage (9) has the form of a deformable or mobile membrane.

4. The air admission device according to one of claims 1 to 3, **characterized in that** the communication passage (9) is formed with a communication orifice between decantation chamber (6) and additional chamber (8), said communication orifice being made in a wall of the additional chamber (8).

5. The air admission device according to claim 4,
**characterized in that** said communication orifice is obturated by an obturation member (10), preferably of the membrane type, essentially positioned inside the additional chamber (8).

6. The air admission device according to one of claims 4 and 5, **characterized in that** the communication orifice is positioned in the vicinity of the face (13) forming the bottom of the additional chamber (8) and forms the low point of the decantation chamber (6).

7. The air admission device according to one of claims 1 to 3, **characterized in that** the communication passage (9) has the form of a conduit connecting the decantation chamber (6) to the additional chamber (8), the area (16) for connecting to the decantation chamber (6) being positioned at a level above the area (17) for connecting to the additional chamber (8).

8. The air admission device according to one of claims 1 to 7, **characterized in that** the emptyable additional chamber (8) is equipped with a drain orifice (14) made in the face (13) forming the bottom of said chamber (8).

9. The air admission device according to claim 8, **characterized in that** the drain orifice (14) is provided with a pressure-sensitive obturation member (15).

## Patentansprüche

1. Luftansaugvorrichtung, die imstande ist, mindestens einen Luftansaugleitungsabschnitt für einen Verbrennungsmotor eines Kraftfahrzeugs zu bilden, wobei die Vorrichtung mindestens umfasst:
- eine Lufteingangsöffnung (1),
- ein Luftfiltergehäuse (2), das mindestens einen Lufteingang (3) und einen Luftausgang (4) aufweist, die auf der einen und der anderen Seite eines Filterbereichs (5) angeordnet sind, der imstande ist, ein Filterelement (7) aufzunehmen, das das Gehäuse (2) in Abschnitte unterteilt, und eine sogenannte entleerbare Abscheidekammer (6), die sich unter dem Filterbereich (5) befindet, um die Kondensate des Filterelements (7) aufzunehmen, und
- eine zusätzliche entleerbare, zwischen der Lufteingangsöffnung (1) und dem Filtergehäuse (2) angeordnete Flüssigkeitssammelkammer (8), wobei diese zusätzliche Kammer (8) mit der Lufteingangsöffnung (1) und dem Eingang (3) des Filtergehäuses (2) kommuniziert, um die Luftzirkulation von der Lufteingangsöffnung (1) zum Eingang (3) des Filtergehäuses (2) zu erlauben,
**dadurch gekennzeichnet, dass** die Luftansaugvorrichtung zwischen der Abscheidekammer (6) und der zusätzlichen Sammelkammer (8) mindestens einen Kommunikationsübergang (9) umfasst, der das Entleeren der Abscheidekammer (6) in die zusätzliche Kammer (8) erlaubt, wobei der Kommunikationsübergang (9) mit mindestens einem druckempfindlichen Verschlussorgan (10) ausgestattet ist, das imstande ist, von einer geschlossenen Stellung in eine geöffnete Entleerungsstellung der Abscheidekammer (6) und umgekehrt in Abhängigkeit von der auf das Verschlussorgan (10) angewendeten Druckdifferenz zu wechseln.

2. Luftansaugvorrichtung nach Anspruch 1,
**dadurch gekennzeichnet, dass** die auf das Verschlussorgan (10) angewendete Druckdifferenz der Differenz zwischen dem Druck (P1) entspricht, der auf die Fläche (11) des Verschlussorgans (10) ausgeübt wird, die zur Abscheidekammer (6) zeigt, und dem Druck (P2), der auf die dem Verschlussorgan (10) gegenüberliegende Fläche (12) ausgeübt wird, die zu der zusätzlichen Kammer (8) zeigt, wobei das Verschlussorgan (10) imstande ist, von der geschlossenen Stellung in die geöffnete Stellung zu wechseln, wenn die Differenz positiv und größer als ein vorbestimmter Schwellenwert ist.

3. Luftansaugvorrichtung nach einem der Ansprüche 1 und 2, **dadurch gekennzeichnet, dass** das Verschlussorgan (10) des Kommunikationsübergangs (9) die Form einer deformierbaren oder beweglichen Membran hat.

4. Luftansaugvorrichtung nach einem der Ansprüche 1 bis 3, **dadurch gekennzeichnet, dass** der Kommunikationsübergang (9) von einer Kommunikationsöffnung zwischen der Abscheidekammer (6) und der zusätzlichen Kammer (8) gebildet wird, wobei die Kommunikationsöffnung in eine Wand der zusätzlichen Kammer (8) eingearbeitet ist.

5. Luftansaugvorrichtung nach Anspruch 4,
**dadurch gekennzeichnet, dass** die Kommunikationsöffnung von einem Verschlussorgan (10) verschlossen wird, vorzugsweise vom Typ Membran, das im Wesentlichen innerhalb der zusätzlichen Kammer (8) angeordnet ist.

6. Luftansaugvorrichtung nach einem der Ansprüche 4 und 5, **dadurch gekennzeichnet, dass** die Kommunikationsöffnung in der Nähe der Seite (13) angeordnet ist, die den Boden der zusätzlichen Kammer (8) bildet und den Tiefpunkt der Abscheidekammer (6) bildet.

7. Luftansaugvorrichtung nach einem der Ansprüche 1 bis 3, **dadurch gekennzeichnet, dass** der Kommunikationsübergang (9) die Form einer Leitung hat, die die Abscheidekammer (6) mit der zusätzlichen Kammer (8) verbindet, wobei der Verbindungsbereich (16) mit der Abscheidekammer (6) auf einer Ebene über dem Verbindungsbereich (17) mit der zusätzlichen Kammer (8) angeordnet ist.

8. Luftansaugvorrichtung nach einem der Ansprüche 1 bis 7, **dadurch gekennzeichnet, dass** die entleerbare zusätzliche Kammer (8) mit einer Entleerungsöffnung (14) ausgestattet ist, die in die Seite (13) eingearbeitet ist, die den Boden der Kammer (8) bildet.

9. Luftansaugvorrichtung nach Anspruch 8,
**dadurch gekennzeichnet, dass** die Entleerungsöffnung (14) mit einem druckempfindlichen Verschlussorgan (15) ausgestattet ist.
